# EUROPEAN PATENT APPLICATION

(11) **EP 2 138 734 A1**
(43) Date of publication of application: **30.12.2009**
(21) Application number: 09163655.5
(22) Date of filing: 24.06.2009
(51) Int. Cl.: F16D 27/00, F16D 27/112, F16D 27/12, F16H 1/28

(54) **Electromagnetic clutch**

(30) Priority: 25.06.2008 JP 2008165583; 19.01.2009 JP 2009008571
(71) Applicant: Kabushiki Kaisha Toyoda Jidoshokki Seisakusho, Kariya-shi, Aichi 448-8671 (JP)
(72) Inventor: Hoshino, Nobuaki, Kariya-shi Aichi 448-8671 (JP); Kawaguchi, Masahiro, Kariya-shi Aichi 448-8671 (JP); Ota, Masaki, Kariya-shi Aichi 448-8671 (JP); Kimoto, Yoshio, Kariya-shi Aichi 448-8671 (JP); Onishi, Toru, Kariya-shi Aichi 448-8671 (JP)
(74) Representative: TBK-Patent

(57) **Abstract**

An electromagnetic clutch includes a coil (57) generating a first magnetic flux or a second magnetic flux depending on the direction of current flowing therein, a stationary core (55) accommodating therein the coil, a stationary magnet (59) providing a magnetic flux that opposes the first magnetic flux, a rotor rotatable concentrically with a rotatable shaft, a moving core fixed to the rotor, a moving magnet (71) providing a magnetic flux that opposes the second magnetic flux, a sun gear (73) fixed to the rotatable shaft, an internal gear (75) fixed to the rotor, a planetary gear (77) meshed with the sun gear and the internal gear, an arm (63) supporting the planetary gear, a pulley rotatable concentrically with the rotatable shaft, a first armature (81) being capable of coupling to the stationary core, and a second armature (83) being capable of coupling to the moving core.

## Description

### BACKGROUND OF THE INVENTION

The present invention relates to an electromagnetic clutch.

A conventional electromagnetic clutch is disclosed in Japanese Unexamined Utility Model Application Publication No. 57-174829. The electromagnetic clutch is mounted to an electric motor having a housing and a rotatable drive shaft extending out from the housing.

The electromagnetic clutch has a first stationary core, a second stationary core and a magnetic shield. The first stationary core is made of a magnetic material and fixed to the front surface of the motor housing. The first stationary coil has therein a first coil, whose front end is exposed. The magnetic shield is made of a nonmagnetic material and fixed to the front end of the first stationary core and the first coil. The second stationary core is made of a magnetic material and fixed to the front surface of the magnetic shield. The second stationary core has therein a second coil, whose front end is exposed.

The electromagnetic clutch has a sun gear, an arm and a pulley. The sun gear is fixed to the front end of the drive shaft concentrically therewith and formed with a cylindrical boss extending rearward in axial direction of the drive shaft. The arm is rotatably and concentrically supported by the boss through a bearing.

The pulley is rotatably and concentrically supported by the sun gear and a hub through a bearing. The hub is located forward of the sun gear and fixed to the front end of the drive shaft by a bolt. The pulley is made of a magnetic material and has a cylindrical shape surrounding the outer periphery of the first stationary core. The hub is coupled through a leaf spring to a first armature facing the front surface of the pulley

The electromagnetic clutch has first and second planetary gears rotatably supported on the arm. The first planetary gears are meshed with the sun gear. The second planetary gears are meshed with the first planetary gears and an internal gear that is formed on the inner peripheral surface of the pulley. The arm is coupled through a leaf spring to a second armature facing the front end of the second stationary core.

In the above-described electromagnetic clutch having the first and second coils, when only the first coil is excited, a magnetic circuit is formed by the first stationary core, the pulley and the sun gear. In such a case, the first armature is coupled to the pulley, and the rotation of the drive shaft is transmitted to the pulley through the bolt, the hub and the first armature.

When only the second coil is excited, on the other hand, a magnetic circuit is formed by the second stationary core and the second armature. In such a case, the second armature is coupled to the second stationary core, and the arm is coupled to the housing, accordingly. The rotation of the drive shaft is transmitted to the pulley through the sun gear, the first and second planetary gears.

When neither of the first coil and the second coil are excited, the first armature is not coupled to the pulley, and the second armature is not coupled to the second stationary core, either. Therefore, the rotation of the drive shaft is not transmitted to the pulley.

Thus, two-speed power transmission and power interruption between the drive shaft and the pulley are accomplished.

Japanese Unexamined Utility Model Application Publications No. 57-46135 and No. 57-44937 disclose other electromagnetic clutches. Each of the electromagnetic clutches has two pulleys having different diameters, one stationary core made of a magnetic material and having therein a coil, and two armatures facing the respective pulleys. The pulleys are rotatably and concentrically supported by a drive shaft through bearings. The stationary core is located between the two pulleys and fixed to a housing. Either one of the armatures is selectively attracted to the stationary core by switching the direction of the current in the coil, so that its corresponding pulley is coupled to the drive shaft.

In such electromagnetic clutch, when the drive shaft is driven by the large pulley, the drive shaft is rotated at a low speed. When the drive shaft is driven by the small pulley, the drive shaft is rotated at a high speed. Thus, two-speed power transmission and power interruption between the drive shaft and the pulley are accomplished.

However, the electromagnetic clutch of the reference No. 57-174829 uses two kinds of planetary gears, while the electromagnetic clutches of the references No. 57-46135 and No. 57-44937 use two pulleys, respectively, thereby resulting in complicated structure. Therefore, a more practical electromagnetic clutch is required.

The present invention is directed to providing a more practical electromagnetic clutch.

### SUMMARY OF THE INVENTION

In accordance with an aspect of the present invention, an electromagnetic clutch for mounting to a housing and a rotatable shaft extending out from the housing includes a coil capable of generating a first magnetic flux or a second magnetic flux depending on the direction of current flowing therein, a stationary core made of a magnetic material for being fixed to the housing and accommodating therein the coil so that one end of the coil is exposed, a stationary magnet fixed to the stationary core so as to face the other end of the coil, and providing a magnetic flux that opposes the first magnetic flux, a rotor rotatable concentrically with the rotatable shaft relative to the housing, a moving core made of a magnetic material and fixed to the rotor so as to face the stationary core at the one end of the coil, a moving magnet fixed to the moving core so as to face the one end of the coil, and providing a magnetic flux that opposes the second magnetic flux, a sun gear fixed to the rotatable shaft concentrically therewith, an internal gear fixed to the rotor, a planetary gear meshed with the sun gear and the internal gear, an arm supporting the planetary gear so as to allow the revolution of the planetary gear about the axis of the rotatable shaft relative to the housing, a pulley rotatable concentrically with the rotatable shaft, along with the planetary gear and the arm, a first armature provided on the rotor and being capable of coupling to the stationary core, and a second armature provided on the pulley and being capable of coupling to the moving core.

In accordance with another aspect of the present invention, an electromagnetic clutch for mounting to a housing and a rotatable shaft extending out from the housing includes a first coil, a first stationary core made of a magnetic material for being fixed to the housing and accommodating therein the first coil, a second coil located away from the first coil, a second stationary core made of a magnetic material for being fixed to the housing and accommodating therein the second coil so that one end of the second coil is exposed, a rotor rotatable concentrically with the rotatable shaft relative to the housing, a moving core fixed to the rotor so as to face the second stationary core at the one end of the second coil, and cooperating with the second stationary core to form a magnetic circuit, a sun gear fixed to the rotatable shaft concentrically therewith, an internal gear fixed to the rotor, a planetary gear meshed with the sun gear and the internal gear, an arm supporting the planetary gear so as to allow the revolution of the planetary gear about the axis of the rotatable shaft relative to the housing, a pulley rotatable concentrically with the rotatable shaft, along with the planetary gear and the arm, a first armature provided on the rotor and being capable of coupling to the first stationary core, and a second armature provided on the pulley and being capable of coupling to the moving core.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a longitudinal sectional view of an electromagnetic clutch according to a first embodiment of the present invention;
Fig. 2 is an enlarged fragmentary view of the electromagnetic clutch of Fig. 1;
Fig. 3 is an exploded view of the electromagnetic clutch of Fig. 1;
Fig. 4 is a schematic view showing the operation of the electromagnetic clutch;
Fig. 5 is a schematic view showing the operation of the electromagnetic clutch;
Fig. 6 is a schematic view showing the operation of the electromagnetic clutch;
Fig. 7 is a fragmentary sectional view of an electromagnetic clutch according to a second embodiment of the present invention;
Fig. 8 is a longitudinal sectional view of an electromagnetic clutch according to a third embodiment of the present invention;
Fig. 9 is a cross-sectional view of she electromagnetic clutch of Fig. 8;
Fig. 10 is a sectional view of an electromagnetic clutch according to a fourth embodiment of the present invention;
Fig. 11 is a fragmentary sectional view of an electromagnetic clutch according to a fifth embodiment of the present invention; and
Fig. 12 is an exploded view of the electromagnetic clutch of Fig. 11.

### DETAILED DESCRIPTION OF THE PREFERRED EMBODIMENTS

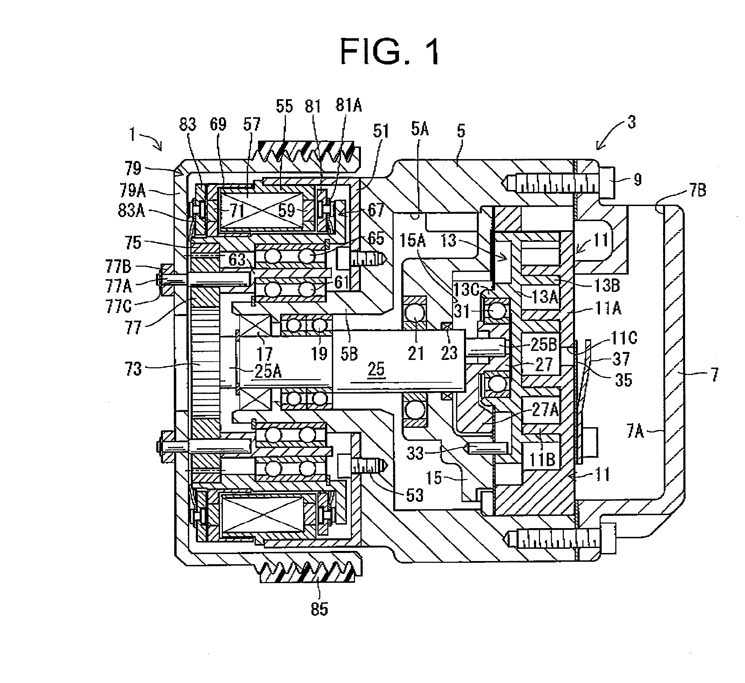

The following will describe the electromagnetic clutch according to the first embodiment of the present invention with reference to Figs. 1 through 6.

Referring to Fig. 1, the electromagnetic clutch is mounted to a scroll compressor 3. It is noted that the left-hand side as viewed in Fig. 1 is the front side of the electromagnetic clutch (scroll compressor 3) and the right-hand side is the rear side of the electromagnetic clutch.

The scroll compressor 3 is used, for example, in a vehicle air conditioner. The scroll compressor 3 has a front housing 5 and a rear housing 7 connected to each other by bolts 9 to form a housing assembly that accommodates therein a fixed scroll 11 and a movable scroll 13. The fixed scroll 11 is fixedly mounted to the front housing 5 and includes a circular base plate 11A and a scroll wall 11B projecting forward from the base plate 11A. The movable scroll 13 also includes a circular base plate 13A and a scroll wall 13B projecting rearward from the base plate 13A. The fixed scroll 11 and the movable scroll 13 are engaged with each other to form therebetween a plurality of compression chambers whose volumes are made gradually smaller toward the center as seen in radial direction of the scrolls 11 and 13.

The front housing 5 is formed with a cylindrical boss 5B in which a seal member 17 and a bearing 19 are provided. The front housing 5 has therein a partition wall 15 in which a bearing 21 and a seal member 23 are provided. The front housing 5 and the partition wall 15 rotatably support a drive shaft 25 (rotatable shaft) through the bearings 19 and 21 and the seal members 17 and 23. The drive shaft 25 has a front end 25A projecting out of the boss 5B of the front housing 5. The partition wall 15 and the movable scroll 13 form therebetween a backpressure chamber 15A that communicates with a discharge chamber 7A formed in the rear housing 7.

The drive shaft 25 has at the rear end thereof a pin 25B that is eccentric to the axis of the drive shaft 25. The pin 25B is rotatably connected to a bush 27 formed with a balance weight 27A. The base plate 13A of the movable scroll 13 is formed with a boss 13C that is coupled to the bush 27 through a bearing 31. The scroll compressor 3 has a mechanism 33 between the partition wall 15 and the base plate 13A of the movable scroll 13 for allowing the orbital motion of the movable scroll 13 and restricting the rotation of the movable scroll 13 on its own axis.

The front housing 5 and the partition wall 15 form therebetween a suction chamber 5A that is connected through an inlet port (not shown) and a tube (not shown) to an evaporator (not shown) of the air conditioner. The outermost compression chamber between the fixed and movable scrolls 11 and 13 is communicable with the suction chamber 5A through the inlet passage (not shown) formed in the partition wall 15, in accordance with the orbital motion of the movable scroll 13.

The base plate 11A of the fixed scroll 11 is formed with a discharge port 11C through which the innermost compression chamber communicates with the discharge chamber 7A in the rear housing 7. The discharge port 11C is closed by a discharge valve 35 mounted to the base plate 11A, and the opening of the discharge valve 35 is restricted by a retainer 37 mounted to the base plate 11A. The rear housing 7 is formed with an outlet port 7B communicating with the discharge chamber 7A and connected through a tube (not shown) to a condenser (not shown) of the air conditioner.

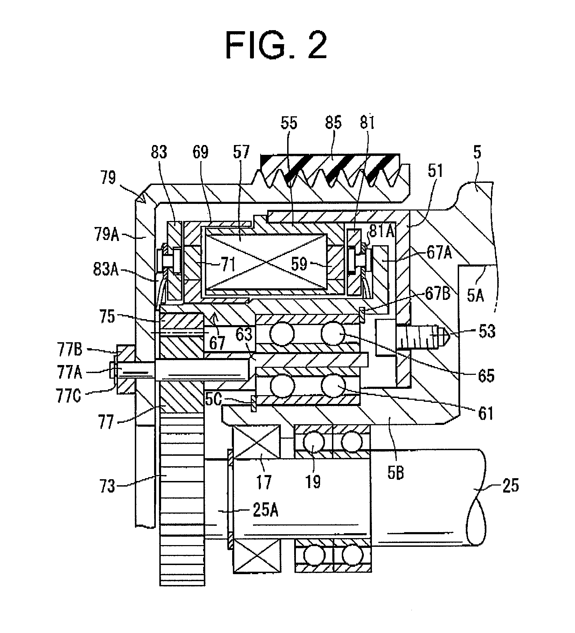

Referring to Fig 2, a bracket 51 made of a nonmagnetic material is mounted on the front surface of the front housing 5 by bolts 53. The electromagnetic clutch has a stationary core 55, a coil 57 and a plurality of stationary magnets 59 (see Fig. 1). The stationary core 55 is made of a magnetic material and fixed to the front end of the bracket 51. The stationary core 55 has a front opening through which the coil 57 is received in the stationary core 55.

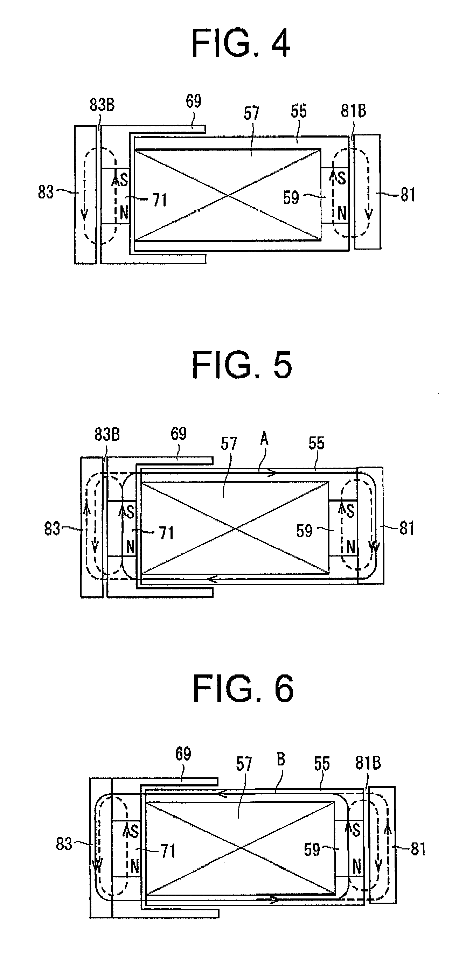

Each of the stationary magnets 59 is provided by a permanent magnet and mounted to the stationary core 55 so as to face the rear end of the coil 57. As shown in Fig. 4, each stationary magnet 59 has a north pole on the side near the drive shaft 25 and a south pole on the opposite side.

The electromagnetic clutch has a first bearing 61, a cylindrical arm 63, a second bearing 65 and a cylindrical rotor 67. The first bearing 61 is mounted on the outer peripheral surface of the boss 5B of the front housing 5 and held by a circlip 5C. The arm 63 is mounted on the outer peripheral surface of the first bearing 61 and rotatable about the axis of the drive shaft 25.

The second bearing 65 is mounted on the outer peripheral surface of the arm 63. The rotor 67 is made of a nonmagnetic material and mounted on the outer peripheral surface of the second bearing 65. The second bearing 65 is fixed to the rotor 67 by a circlip 67B. The rotor 67 is also rotatable about the axis of the drive shaft 25. The second bearing 65 is located radially outward of the first bearing 61.

The electromagnetic clutch further has a moving core 69 and a plurality of moving magnets 71 (Fig. 1). The moving core 69 is made of a magnetic material and fixed to the rotor 67. The moving core 69 has a rear opening for receiving therein the front part of the stationary core 55 and the coil 57.

Each of the moving magnets 71 is provided by a permanent magnet and mounted to the moving core 69 so as to face the front end of the coil 57. As shown in Fig. 4, each moving magnet 71 has a north pole on the side near the drive shaft 25 and a south pole on the opposite side.

The electromagnetic clutch further has a sun gear 73, an internal gear 75 and a plurality of planetary gears 77. The sun gear 73 is fixed to the front end 25A of the drive shaft 25 and rotates therewith about the axis of the drive shaft 25. The internal gear 75 is fixed on the inner peripheral surface of the rotor 67. The sun gear 73 and the internal gear 75 are meshed with the planetary gears 77.

Each of the planetary gears 77 is rotatably supported by a pin 77A, the rear end of which is fixed to the arm 63. The planetary gear 77 in meshing engagement with the sun gear 73 and the internal gear 75 is rotatable about the pin 77A and also revolvable about the axis of the drive shaft 25 relative to the front housing 5 of the scroll compressor 3.

The electromagnetic clutch still further has a pulley 79, a first armature 81 and a second armature 83. The pulley 79 is fixedly mounted to the front end of the pin 77A by a spacer 77B and a circlip 77C. The pulley 79 is rotatable with the planetary gears 77 and the arm 63 about the axis of the drive shaft 25, relative to the front housing 5 of the scroll compressor 3.

The rotor 67 has at the rear end thereof a flange portion 67A extending radially outward. The first armature 81 is connected to the front surface of the flange portion 67A through a leaf spring 81A. The first armature 81 is located so as to face the rear end of the stationary core 55 through a first air gap 81 B (see Fig. 4). The first armature 81 is movable within the range of the first air gap 81B against the elastic force of the leaf spring 81A so as to come into contact with the stationary core 55. Though the magnetic flux of the stationary magnet 59 always passes through the first air gap 81 B and the first armature 81, so as to affect the attractive force to the first armature 81, the elastic force of the leaf spring 81A sustains the first armature 81 against the attractive force.

The second armature 83 is connected to the rear surface of a flange portion 79A of the pulley 79 through a leaf spring 83A. The second armature 83 is located so as to face the front end of the moving core 69 through a second air gap 83B (see Fig. 4). The second armature 83 is movable within the range of the second air gap 83B against the elastic force of the leaf spring 83A so as to come into contact with the moving core 69. Though the magnetic flux of the moving magnet 71 always passes through the second air gap 83B and the second armature 83, so as to affect the attractive force to the second armature 83, the elastic force of the leaf spring 83A sustains the second armature 83 against the attractive force.

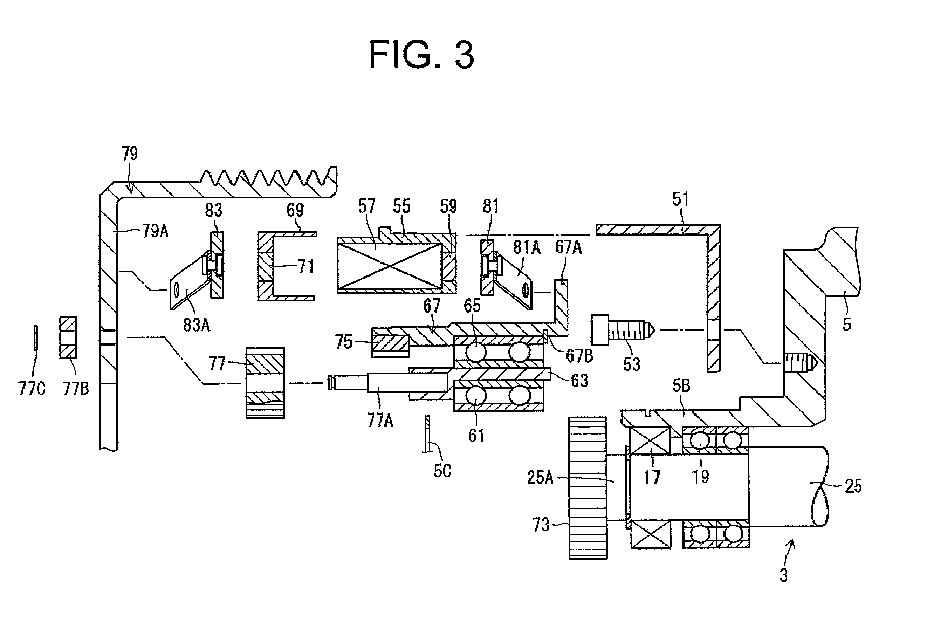

The following will describe the procedure of assembling the electromagnetic clutch with reference to Fig. 3.

Firstly, the sun gear 73 is fixed to the front end 25A of the drive shaft 25 of the scroll compressor 3 previously assembled, and the bracket 51 is fixed to the front housing 5 by the bolts 53.

The first bearing 61 is mounted to the arm 63 having the pins 77A fixed thereto previously, the second bearing 65 is mounted to the arm 63, and the rotor 67 having the internal gear 75 fixed thereto previously is mounted to the second bearing 65 and held by the circlip 67B. One end of the leaf spring 81A is riveted to the flange portion 67A of the rotor 67, and the first armature 81 is riveted to the other end of the leaf spring 81 A. The sub-assembly thus made of the arm 63, the rotor 67, the first bearing 61 and the second bearing 65 is mounted to the scroll compressor 3 by fixing the first bearing 61 to the boss 5B of the front housing 5 by use of the circlip 5C.

The coil 57 is provided in the stationary core 55 having the stationary magnets 59 fixed thereto previously, and the stationary core 55 is fixedly mounted to the bracket 51. Then the moving core 69 having the moving magnets 71 fixed thereto previously is fixedly mounted to the rotor 67 so as to cover the front part of the stationary core 55 and the coil 67.

One end of the leaf spring 83A is riveted to the flange portion 79A of the pulley 79, and the second armature 83 is riveted to the other end of the leaf spring 83A. The planetary gears 77 are fitted on the respective pins 77A, and then the pulley 79 is mounted on the pins 77A by using the spacers 77B and the circlips 77C. Thus, the assembly of the electromagnetic clutch is completed.

The scroll compressor 3 is one of the components of the vehicle air conditioner, as well as the evaporator, the condenser and the expansion valve. Engine power is transmitted through a belt 85 to the pulley 79 of the electromagnetic clutch 1. The coil 57 is connected to a battery (not shown), and the direction of the current flowing in the coil 57 is switched by a controller (not shown). That is, the coil 57 generates a first magnetic flux or a second magnetic flux, depending on the direction of the current flowing therein.

In the above-described electromagnetic clutch, when a current flows in one direction in the coil 57, the stationary core 55, the moving core 69 and the first armature 81 form a magnetic circuit A, as shown in Fig. 5. Specifically, since the magnetic flux of the coil 57 (first magnetic flux) opposes the magnetic flux of the stationary magnet 59, the resulting magnetic flux passes through the first armature 81 and the first air gap 81 B where the magnetic flux of the stationary magnet 59 goes through the same direction. In addition, since the magnetic flux of the coil 57 overlaps with the magnetic flux of the moving magnet 71, the resulting magnetic flux passes through the moving magnet 71. The magnetic fluxes of the coil 57 and the moving magnet 71 in the second armature 83 and the second air gap 83B are opposed to cancel each other. In such a case, since the bracket 51 and the rotor 67 (see Figs. 1 and 2) are made of a nonmagnetic material, the magnetic flux in the magnetic circuit A does not leak neither to the bracket 51 nor to the rotor 67, therefore, they prevent the magnetic flux in the stationary and moving cores 55 and 69 from being weaken.

Thus, since the stationary core 55, the moving core 69, the first air gap 81 B and the first armature 81 form the magnetic circuit A, the magnetic force affected to the first armature 81 becomes greater than the elastic force of the leaf spring 81A, and the first armature 81 is attracted to the stationary core 55 and coupled thereto, as shown in Fig. 5. The second armature 83 is not attracted to the moving core 69, keeping the second air gap 83B. Such phenomenon has been confirmed by magnetic field analysis.

In the case where the first armature 81 is coupled to the stationary core 55 as shown in Fig. 5, the rotor 67 is coupled to the front housing 5 and, therefore, the rotation of the pulley 79 is transmitted through the planetary gears 77 and the sun gear 73 to the drive shaft 25 with increased speed. Thus, the scroll compressor 3 is operated at a high speed, resulting in effective cooling.

On the other hand, when the current flows in the other direction in the coil 57, the stationary core 55, the moving core 69 and the second armature 83 form a magnetic circuit B, as shown in Fig. 6. Specifically, since the magnetic flux of the coil 57 (second magnetic flux) opposes the magnetic flux of the moving magnet 71, the resulting magnetic flux passes through the second armature 83 and the second air gap 83B where the magnetic flux of the moving magnet 71 goes through the same direction. In addition, since the magnetic flux of the coil 57 overlaps with the magnetic flux of the stationary magnet 59, the resulting magnetic flux passes through the stationary magnet 59. The magnetic fluxes of the coil 57 and the stationary magnet 59 in the first armature 81 and the first air gap 81B are opposed to cancel each other. In such a case, since the bracket 51 and the rotor 67 (see Figs. 1 and 2) are made of a nonmagnetic material, the magnetic flux in the magnetic circuit B does not leak neither to the bracket 51 nor to the rotor 67, therefore, they prevent the magnetic flux in the stationary and moving cores 55 and 69 from being weaken.

Thus, since the stationary core 55, the moving core 69, the second air gap 83B and the second armature 83 form the magnetic circuit B, the magnetic force affected to the second armature 83 becomes greater than the elastic force of the leaf spring 83A, and the second armature 83 is attracted to the moving core 69 and coupled thereto, as shown in Fig. 6. The first armature 81 is not attracted to the stationary core 55, keeping the first air gap 81 B. Such phenomenon has been also confirmed by magnetic field analysis.

In the case where the second armature 83 is coupled to the moving core 69 as shown in Fig. 6, the rotor 67 is coupled to the pulley 79, and the rotation of the pulley 79 is transmitted through the rotor 67, the internal gear 75, the planetary gears 77 and the sun gear 73 to the drive shaft 25 with constant speed. Therefore, the scroll compressor 3 is operated at a low speed and overcooling is prevented.

When the coil 57 is not excited, as shown in Fig. 4, the first armature 81 is not coupled to the stationary core 55, and the second armature 83 is not coupled to the moving core 69, either. The rotation of the pulley 79 is not transmitted to the drive shaft 25, and no cooling is performed, accordingly.

In the above-described electromagnetic clutch, two-speed power transmission and power interruption between the pulley 79 and the drive shaft 25 are accomplished. Since the electromagnetic clutch has only one kind of the planetary gear 77 and only one pulley 79 and belt 85, the structure of the electromagnetic clutch becomes simple, resulting in a more practical electromagnetic clutch.

In addition, the planetary gears 77 are rotatably supported by the arm 63 that rotates integrally with the pulley 79. The first bearing 61 is provided between the arm 63 and the front housing 5, and the second bearing 65 is provided between the rotor 67 and the arm 63. The arrangement wherein the arm 63 thus supports both the planetary gears 77 and the pulley 79 helps to reduce the number of parts of the electromagnetic clutch.

Further, since the second bearing 65 is located radially outward of the first bearing 61, the axial length of the electromagnetic clutch becomes smaller. Though such small axial length causes an enlargement of the external diameter of the electromagnetic clutch, the entire size of the unit composed of the electromagnetic clutch and the scroll compressor 3 is not enlarged, because the scroll compressor 3 has a relatively small axial length and a large external diameter. Therefore, the unit offers high flexibility in mounting to a vehicle.

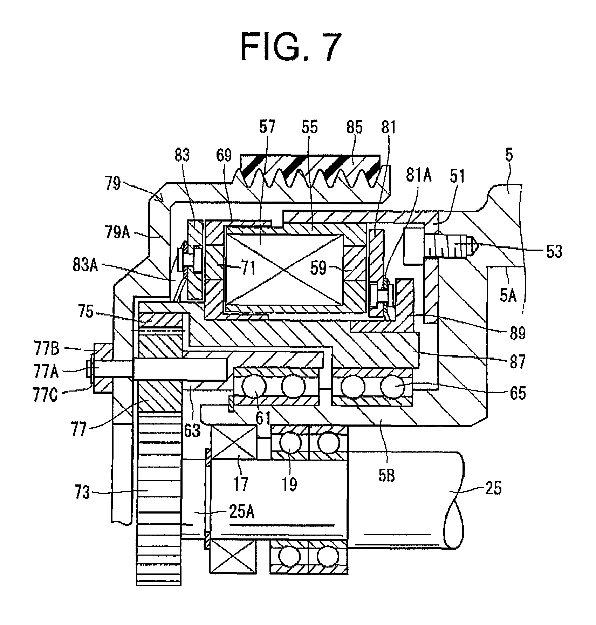

Fig. 7 is a fragmentary sectional view of an electromagnetic clutch according to the second embodiment of the present invention. In Fig. 7, same reference numbers are used for the common elements or components in the first and second embodiments, and the description of such elements or components for the second embodiment will be omitted. The electromagnetic clutch has a rotor member 87 and a flange member 89. The flange member 89 is fixed to the rear end of the rotor member 87. The rotor member 87 and the flange member 89 serve as the rotor of the present invention. The first armature 81 is connected to the front surface of the flange member 89 through the leaf spring 81A. The first bearing 61 is provided between the boss 5B of the front housing 5 and the arm 63, and the second bearing 65 is provided between the boss 5B and the rotor member 87. The second bearing 65 is located rearward of the first bearing 61. The first bearing 61 and the second bearing 65 are provided on the front housing 5 so as to be arranged in the axial direction of the drive shaft 25.

The arrangement of the first bearing 61 and the second bearing 65 in the second embodiment reduces the external diameter of the electromagnetic clutch, resulting in high flexibility in mounting to a vehicle.

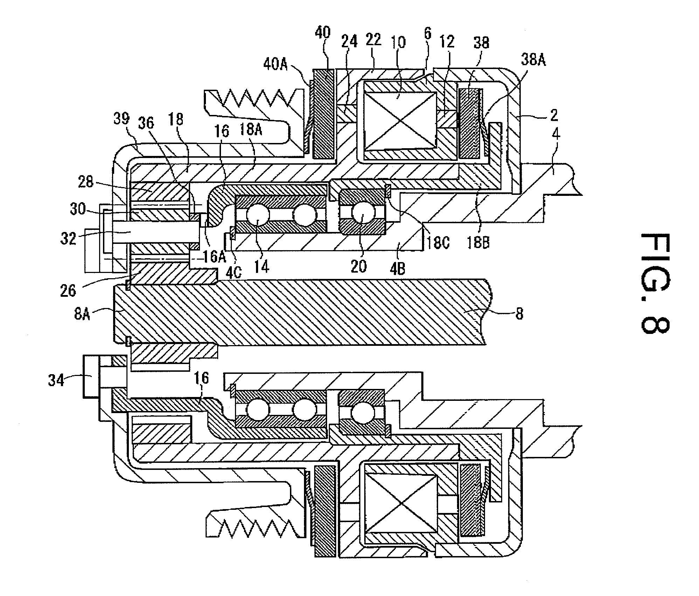

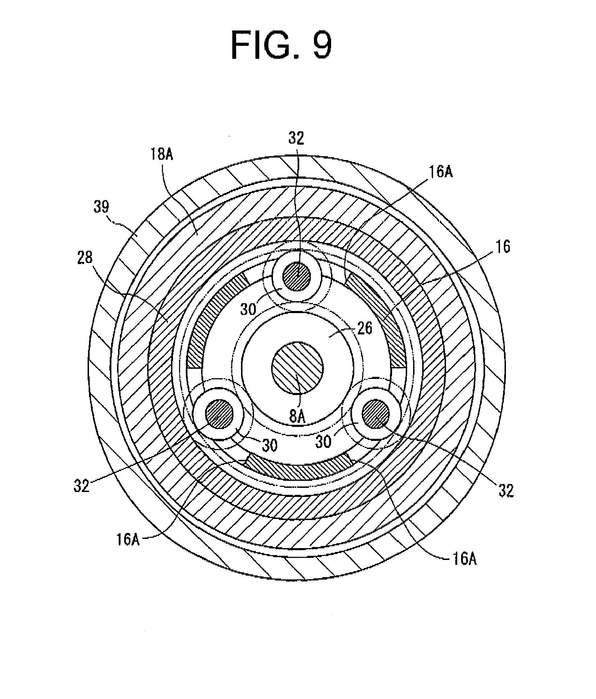

Fig. 8 is a longitudinal sectional view of an electromagnetic clutch according to the third embodiment of the present invention. Fig. 9 is a cross-sectional view of the electromagnetic clutch of Fig. 8. Referring to Fig 8, a bracket 2 is mounted on the front surface of a front housing 4. The electromagnetic clutch has a stationary core 6, a coil 10 and a plurality of stationary magnets 12. The stationary core 6 is fixed to the front end of the bracket 2. The stationary core 6 has a front opening through which the coil 10 is received in the stationary core 6. Each of the stationary magnets 12 is mounted to the stationary core 6 so as to face the rear end of the coil 10.

The electromagnetic clutch has a first bearing 14, an arm member 16, a second bearing 20 and a rotor 18. The first bearing 14 is mounted on the outer peripheral surface of a boss 4B of the front housing 4 by a circlip 4C. The arm member 16 has a cylindrical shape and is mounted on the outer peripheral surface of the first bearing 14. The arm member 16 is formed with three cuts 16A, as shown in Fig. 9. The part of the arm member 16 between any two adjacent cuts 16A extends forward in the axial direction of a drive shaft 8 and is fixed to a pulley 39 by a rivet 34.

The rotor 18 is located radially outward of the boss 4B of the front housing 4. The rotor 18 includes a cylindrical rotor member 18A and a flange member 18B fixed to the rear end of the rotor member 18A. The second bearing 20 is provided between the boss 4B of the front housing 4 and the flange member 18B of the rotor 18, and fixed to the flange member 18B by using a circlip 18C. The second bearing 20 is located rearward of the first bearing 14. The first bearing 14 and the second bearing 20 are provided on the front housing 4 so as to be arranged in the axial direction of the drive shaft 8.

The electromagnetic clutch has a moving core 22 and a plurality of moving magnets 24. The moving core 22 is formed integrally with the rotor member 18A of the rotor 18. The moving core 22 is located forward of the coil 10 and has a rear opening for receiving therein the front part of the stationary core 6 and the coil 10. Each of the moving magnets 24 is mounted to the moving core 22 so as to face the front end of the coil 10.

The electromagnetic clutch has a sun gear 26, an internal gear 28 and three planetary gears 30 (see Fig. 9). The sun gear 26 is fixed to the front end 8A of the drive shaft 8. The internal gear 28 is fixed on the inner peripheral surface of the rotor member 18A. The sun gear 26 and the internal gear 28 are meshed with the planetary gears 30. The planetary gears 30 are located in the respective cuts 16A of the arm member 16.

Each of the planetary gears 30 is rotatably supported by a pin 32, the front end of which is fixed to the pulley 39. The planetary gear 30 is prevented from being removed from the pin 32 by a nut 36. The arm member 16 and the pins 32 serve as the arm of the present invention.

The electromagnetic clutch further has a first armature 38 and a second armature 40. The first armature 38 is connected to the front surface of the flange member 18B through a leaf spring 38A and movable against the elastic force of the leaf spring 38A so as to come into contact with the stationary core 6.

The second armature 40 is connected to the rear surface of the pulley 39 through a leaf spring 40A and movable against the elastic force of the leaf spring 40A so as to come into contact with the moving core 22.

In the third embodiment, load acting on the pulley 39 is transmitted to the arm member 16 and then to the front housing 4 through the first bearing 14. Therefore, the load acting on the pulley 39 is prevented from acting on the planetary gears 30 through the pins 32, so that the planetary gears 30 are rotated smoothly. In addition, the pin 32 and the planetary gear 30 need not to be enlarged in size for improved durability, so that the entire size of the electromagnetic clutch is reduced.

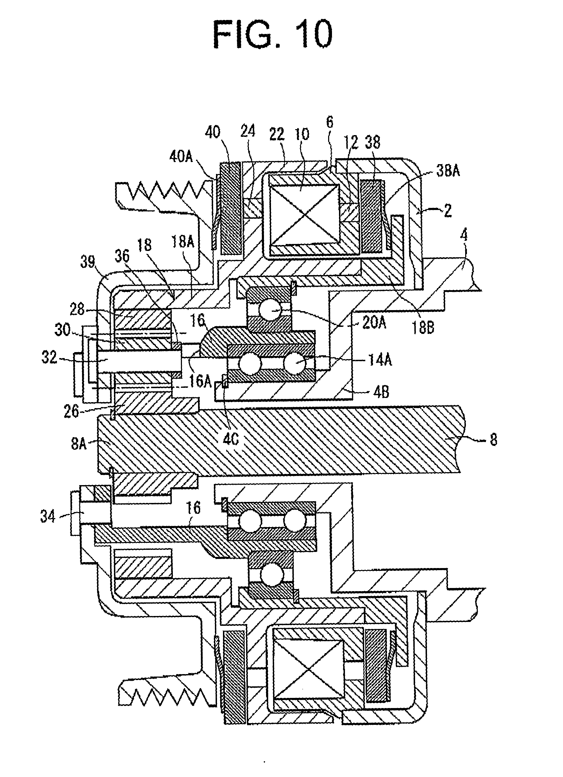

Fig. 10 is a sectional view of an electromagnetic clutch according to the fourth embodiment of the present invention. In Fig. 10, same reference numbers are used for the common elements or components in the third and fourth embodiments, and the description of such elements or components for the fourth embodiment will be omitted. In the fourth embodiment, the first bearing 14A is mounted on the outer peripheral surface of the boss 4B of the front housing 4, and the arm member 16 is mounted on the outer peripheral surface of the first bearing 14A. The second bearing 20A is mounted on the outer peripheral surface of the arm member 16. The flange member 18B is mounted on the outer peripheral surface of the second bearing 20A. The second bearing 20A is located radially outward of the first bearing 14A.

The arrangement of the first bearing 14A and the second bearing 20A in the fourth embodiment reduces the axial length of electromagnetic clutch, resulting in high flexibility in mounting to a vehicle.

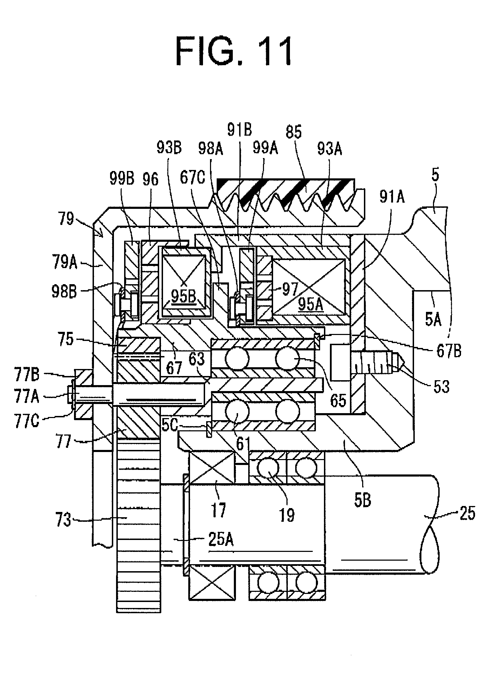

Fig. 11 is a fragmentary sectional view of an electromagnetic clutch according to the fifth embodiment of the present invention. In Fig. 11, same reference numbers are used for the common elements or components in the first and fifth embodiments, and the description of such elements or components for the fifth embodiment will be omitted. Referring to Fig 11, a first bracket 91A made of a nonmagnetic material is mounted on the front surface of the front housing 5 by the bolts 53. The first bracket 91A is provided in the form of a ring. The electromagnetic clutch has a first core member 93A, a cover member 97 and a first coil 95A. The first core member 93A is made of a magnetic material and fixed to the front surface of the first bracket 91A. The first core member 93A has a front opening through which the first coil 95A is received in the first core member 93A. The front opening of the first core member 93A is closed by the cover member 97. The cover member 97 has holes therethrough to form a magnetic circuit of the first stationary core. The first core member 93A and the cover member 97 serve as the first stationary core of the present invention.

A cylindrical second bracket 91 B made of a nonmagnetic material is fixed to the outer peripheral end of the first bracket 91A. The first bracket 91A and the second bracket 91 B serve as the bracket of the present invention. A second stationary core 93B made of a magnetic material is fixed to the front end of the second bracket 91 B. The second stationary core 93B has a front opening for receiving therein a second coil 95B.

The rotor 67 has at the middle thereof a flange portion 67C extending radially outward. The electromagnetic clutch further has a first armature 99A connected to the rear surface of the flange portion 67C through a leaf spring 98A, a moving core 96 and a second armature 99B. The first armature 99A is located so as to face the front surface of the cover member 97 through the air gap as in the case of the first embodiment. The first armature 99A is movable within the range of the air gap against the elastic force of the leaf spring 98A so as to come into contact with the cover member 97.

The moving core 96 is made of a magnetic material and fixed to the rotor 67. The moving core 96 is located forward of the second coil 95B and has a rear opening for receiving therein the front part of the second stationary core 93B and the second coil 95B. The moving core 96 has holes therethrough to form a magnetic circuit.

The second armature 99B is connected to the rear surface of the flange portion 79A of the pulley 79 through a leaf spring 98B. The second armature 99B is located so as to face the front end of the moving core 96 through the air gap as in the case of the first embodiment The second armature 99B is movable within the range of the air gap against the elastic force of the leaf spring 98B so as to come into contact with the moving core 96.

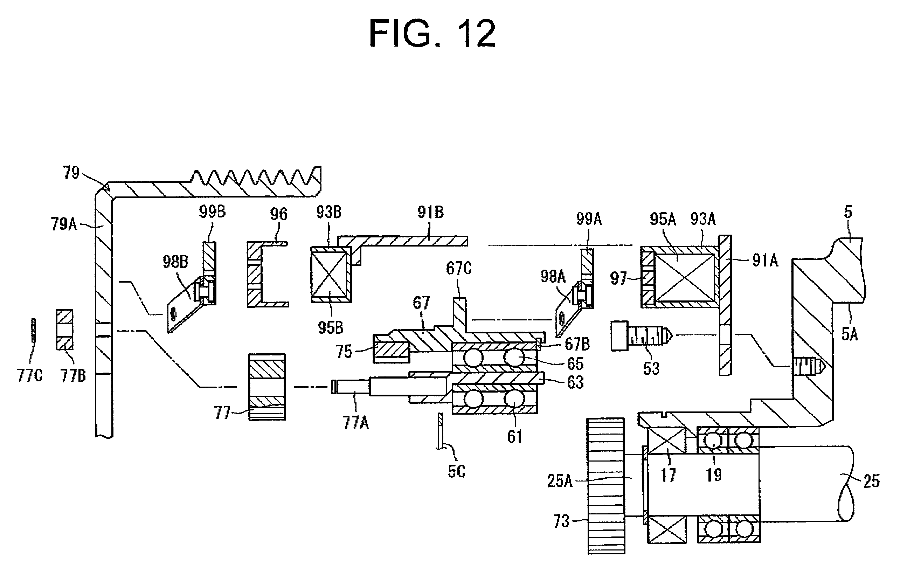

The following will describe the procedure of assembling the electromagnetic clutch with reference to Fig. 12.

Firstly, the sun gear 73 is fixed to the front end 25A of the drive shaft 25 of the scroll compressor 3. The first coil 95A is provided in the first core member 93A, and the front opening of the first core member 93A is closed by the cover member 97. The first stationary core thus formed is fixed to the first bracket 91A. The first bracket 91A is then fixed to the front housing 5 by the bolts 53.

One end of the leaf spring 98A is riveted to the flange portion 67C of the rotor 67, and the first armature 99A is riveted to the other end of the leaf spring 98A. The sub-assembly of the arm 63, the rotor 67, the first bearing 61 and the second bearing 65 is mounted to the scroll compressor 3 by fixing the first bearing 61 to the boss 5B of the front housing 5 by the circlip 5C, as in the case of the first embodiment.

The second coil 95B is provided in the second stationary core 93B, the second stationary core 93B is fixed to the second bracket 91 B, and the second bracket 91B is in turn fixed to the first bracket 91A. Then the moving core 69 is fixed to the rotor 67 so as to cover the front part of the second stationary core 93B and the second coil 95B.

One end of the leaf spring 98B is riveted to the flange portion 79A of the pulley 79, and the second armature 99B is riveted to the other end of the leaf spring 98B. The planetary gears 77 are fitted on the respective pins 77A, and then the pulley 79 is mounted on the pins 77A, as in the case of the first embodiment. Thus, the assembly of the electromagnetic clutch is completed.

The first and second coils 95A and 95B are connected to a battery (not shown) and selectively excited by a controller (not shown).

In the fifth embodiment, when only the first coil 95A is excited, a magnetic circuit is formed by the first core member 93A, the cover member 97 and the first armature 99A, and the first armature 99A is coupled to the cover member 97.

In such a case, the rotor 67 is coupled to the front housing 5, and the rotation of the pulley 79 is transmitted through the planetary gears 77 and the sun gear 73 to the drive shaft 25 with increased speed, accordingly.

When only the second coil 95B is excited, on the other hand, a magnetic circuit is formed by the second stationary core 93B and the moving core 96, and the second armature 99B is coupled to the moving core 96. In such a case, the rotor 67 is coupled to the pulley 79, and the rotation of the pulley 79 is transmitted through the rotor 67, the internal gear 75, the planetary gears 77 and the sun gear 73 to the drive shaft 25 with constant speed.

When neither of the first coil 95A and the second coil 95B are excited, the first armature 99A is not coupled to the cover member 97, and the second armature 99B is not coupled to the moving core 96, either. Accordingly, the rotation of the pulley 79 is not transmitted to the drive shaft 25.

Thus, the fifth embodiment offers the advantages similar to those of the first embodiment.

In each of the foregoing embodiments, the electromagnetic clutch is used for the compressor, but it may be used for other devices such as an electric motor or a pump. In addition, the compressor may be of a swash plate type or a vane type.

An electromagnetic clutch includes a coil generating a first magnetic flux or a second magnetic flux depending on the direction of current flowing therein, a stationary core accommodating therein the coil, a stationary magnet providing a magnetic flux that opposes the first magnetic flux, a rotor rotatable concentrically with a rotatable shaft, a moving core fixed to the rotor, a moving magnet providing a magnetic flux that opposes the second magnetic flux, a sun gear fixed to the rotatable shaft, an internal gear fixed to the rotor, a planetary gear meshed with the sun gear and the internal gear, an arm supporting the planetary gear, a pulley rotatable concentrically with the rotatably shaft, a first armature being capable of coupling to the stationary core, and a second armature being capable of coupling to the moving core.

## Claims

1. An electromagnetic clutch for mounting to a housing (5) and a rotatable shaft (25) extending out from the housing (5), comprising:
a coil (57) capable of generating a first magnetic flux or a second magnetic flux depending on the direction of current flowing therein;
a stationary core (55) made of a magnetic material for being fixed to the housing (5) and accommodating therein the coil (57) so that one end of the coil (57) is exposed;
a sun gear (73) fixed to the rotatable shaft (25) concentrically therewith;
a planetary gear (77) meshed with the sun gear (73);
an internal gear (75) meshed with the planetary gear (77);
an arm (63) supporting the planetary gear (77) so as to allow the revolution of the planetary gear (77) about the axis of the rotatable shaft (25) relative to the housing (5); and
a pulley (79) rotatable concentrically with the rotatable shaft (25), along with the planetary gear (77) and the arm (63),
**characterized by**
a stationary magnet (59) fixed to the stationary core (99) so as to face the other end of the coil (57), and providing a magnetic flux that opposes the first magnetic flux;
a rotor (67) fixed to internal gear (75) and rotatable concentrically with the rotatable shaft (25) relative to the housing (5);
a moving core (69) made of a magnetic material and fixed to the rotor (67) so as to face the stationary core (55) at the one end of the coil (57);
a moving magnet (71) fixed to the moving core (69) so as to face the one end of the coil (57), and providing a magnetic flux that opposes the second magnetic flux;
a first armature (81) provided on the rotor (67) and being capable of coupling to the stationary core (55); and
a second armature (83) provided on the pulley (79) and being capable of coupling to the moving core (69).

2. The electromagnetic clutch according to claim 1, wherein the arm (63) rotatably supports the planetary gear (77) and is rotatable integrally with the pulley (79), a first bearing (61) is provided between the arm (63) and the housing (5), and a second bearing (65) is provided between the rotor (67) and the arm (63) or between the rotor (67) and the housing (5).

3. The electromagnetic clutch according to claim 1, further comprising a pin (32) fixed to the pulley (39) and rotatably supporting the planetary gear (30), wherein the arm includes an arm member (16) fixed to and rotatable integrally with the pulley (39), a first bearing (14) is provided between the arm member (16) and the housing (4), and a second bearing (20) is provided between the rotor (18) and the arm member (16) or between the rotor (18) and the housing (4).

4. The electromagnetic clutch according to claim 2 or claim 3, wherein the second bearing (65) is located radially outward of the first bearing (61).

5. The electromagnetic clutch according to claim 2 or claim 3, wherein the first bearing (61) and the second bearing (65) are arranged in axial direction of the rotatable shaft (25).

6. The electromagnetic clutch according to any one of claims 1 through 5,
wherein the rotor (18, 67) is made of a nonmagnetic material.

7. The electromagnetic clutch according to any one of claims 1 through 6, further comprising a bracket (51) that is made of a nonmagnetic material so as to mount the stationary core (55) to the housing (5) thereby.

8. The electromagnetic clutch according to claim 1, wherein the first armature (81) faces to the stationary core (55) over the stationary magnet (59) with an air gap (81 B) therebetween, the second armature (83) faces to the moving core (69) over the moving magnet (71) with an air gap (83B) therebetween, and the first and second armatures (81, 83) are elastically supported by the rotor (67) and the pulley (79) respectively.

9. An electromagnetic clutch for mounting to a housing (5) and a rotatable shaft (25) extending out from the housing (5), comprising:
a first coil (95A);
a first stationary core (93A, 97) made of a magnetic material for being fixed to the housing (5) and accommodating therein the first coil (95A);
a second coil (95B) located away from the first coil (95A);
a second stationary core (93B) made of a magnetic material for being fixed to the housing (5) and accommodating therein the second coil (95B) so that one end of the second coil (95B) is exposed;
a sun gear (73) fixed to the rotatable shaft (25) concentrically therewith;
a planetary gear (77) meshed with the sun gear (73);
an internal gear (75) meshed with the planetary gear (77);
an arm (63) supporting the planetary gear (77) so as to allow the revolution of the planetary gear (77) about the axis of the rotatable shaft (25) relative to the housing (5); and
a pulley (79) rotatable concentrically with the rotatable shaft (25), along with the planetary gear (77) and the arm (63),
**characterized by**
a rotor (67) fixed to internal gear (75) and rotatable concentrically with the rotatable shaft (25) relative to the housing (5);
a moving core (96) fixed to the rotor (67) so as to face the second stationary core (93B) at the one end of the second coil (95B), and cooperating with the second stationary core (93B) to form a magnetic circuit;
a first armature (99A) provided on the rotor (67) and being capable of coupling to the first stationary core (93A, 97); and
a second armature (99B) provided on the pulley (79) and being capable of coupling to the moving core (96).

10. The electromagnetic clutch according to claim 9, wherein a first bearing (61) is provided between the arm (63) and the housing (5), a second bearing (65) is provided between the rotor (67) and the arm (63), and the second bearing (65) is located radially outward of the first bearing (61).

11. The electromagnetic clutch according to claim 9 or claim 10, wherein the rotor (67) is made of a nonmagnetic material.

12. The electromagnetic clutch according to any one of claims 9 through 11, further comprising a bracket (91A, 91B) that is made of a nonmagnetic material so as to mount the first and second stationary cores (93A, 97, 93B) to the housing (5) thereby.
